# EUROPEAN PATENT SPECIFICATION

(11) **EP 4 038 805 B1**
(45) Date of publication and mention of the grant of the patent: **01.05.2024**
(21) Application number: 20792310.3
(22) Date of filing: 05.10.2020
(51) Int. Cl.: H04L 5/00

(54) **POSITIONING RESOURCE ALLOCATION**
POSITIONIERUNGSRESSOURCENZUWEISUNG
ATTRIBUTION DE RESSOURCE DE POSITIONNEMENT

(30) Priority: 04.10.2019 SE 1930314
(43) Date of publication of application: 10.08.2022
(73) Proprietor: Sony Group Corporation, Tokyo 108-0075 (JP); Sony Europe B.V., Weybridge, Surrey KT13 0XW (GB)
(72) Inventor: BERGGREN, Anders, 226 49 Lund (SE); PRIYANTO, Basuki, 224 68 Lund (SE); HILL, Johan, 221 88 Lund (SE)
(74) Representative: Kraus & Lederer PartGmbB
(86) International application number: PCT/EP2020/077828
(87) International publication number: WO 2021/064239

(56) References cited:
- WO-A1-2018/070913
- WO-A1-2018/143859
- US-A1- 2019 074 946
- US-A1- 2019 162 817

## Description

### TECHNICAL FIELD

Various examples relate to allocation of resources for communicating positioning reference signals for positioning of devices, for example mobile wireless communication devices in a communications network.

### BACKGROUND

Positioning techniques for mobile devices are applied in various fields of technology. In particular mobile wireless communication devices operated in a communications network may combine positioning techniques with wireless communication. In this context, a particular technique is the Observed Time Difference Of Arrival (OTDOA). For example, in OTDOA, downlink (DL) positioning reference signals (PRS) are transmitted by a plurality of radio access nodes and received by a mobile wireless communication device. A radio access node may comprise for example a base station, for example an eNodeB in LTE (Long-Term Evolution, 4G) technologies or a gNB in NR (New Radio, 5G) technologies. The mobile wireless communication device can then determine the time-difference of arrival (TDOA), sometimes also referred to as Reference Signal Time Difference (RSTD). The TDOA can thus correspond to the observed time difference between the positioning reference signals (PRS) received from a target base station and a reference base station. In some examples, it is possible that the mobile wireless communication device determines the TDOA for two or more base stations: this may typically involve three or more base stations, because one base station is used as the reference. At least three base-stations may be required in order to perform positioning estimation using multilateration.

A further particular positioning technique may be based on received power and/or quality of positioning reference signals. For example, a mobile wireless communication device may receive positioning reference signals from a plurality of base stations or cells and may report reference signal received power and quality (RSRP/RSRQ) along with the base station or cell ID(s) for positioning purpose.

Although in the following reference will be made mainly to OTDOA, the techniques herein may be applied to any other kind of PRS based positioning techniques, for example RSRP/RSRQ unless specifically noted otherwise.

Based on the TDOA, location information for the mobile device can be estimated. The location information may be indicative of the position of the mobile device. For determining the location information, predefined locations of the base stations involved and/or predefined time offsets between the involved base stations can be considered. In some examples, the location information may be determined based on multilateration or multiangulation.

OTDOA techniques are described in the Third Generation Partnership Project (3GPP) Technical Specification (TS) 36.211 V13.2.0 (2016-06), chapter 6.10.4., TS 36.355 V13.1.0 (2016-03) chapter 6.5.1., as well as TS 36.455 V13.1.0 (2016-03) chapter 8.2.5.

OTDOA is a well-known downlink-based positioning method in cellular based systems like for example LTE. Also for NR techniques, support for downlink-based positioning, including OTDOA, is considered. In principle, the base-stations transmit PRSs and the user equipment (UE) calculates the time difference of arrival from each base-station, and reports the measurement result to a location server (LS), for example via a LTE positioning protocol (LPP). The location server may determine the location of the wireless communication device based on multilateration.

Positioning in NR has higher requirements than LTE, as it will typically have to fulfill both regulatory as well as commercial requirements, see for example 3GPP TR 38.855 V16.0.0 (2019-03). For DL based positioning, it is concluded that OTDOA or RSTD based positioning will be used together with measured/estimated Angle of Departure (AoD) to achieve better accuracy. However, different channels and scenarios may have different results concerning accuracy, latency, etc. In some cases, it may be very difficult to fulfill the requirements.

Furthermore, NR supports beamforming and therefore positioning methods may need to consider this concept. The selection of beams for positioning purposes will affect the localization accuracy and positioning latency as well as the amount of system resources needed for a certain coverage, accuracy and power consumption related to the localization. For certain coverage requirements and Signal-to-Noise Ratio (SNR) values, a large amount of resources may be needed in order to comply with the system requirements defined in TR 38.855. Using more system resources may increase power consumption and may waste spectrum. Using less system resources may cause less good system performance and risk of not fulfilling the system requirements.

Therefore, OTDOA positioning techniques according to reference implementations face certain drawbacks and restrictions. For example, the accuracy of such positioning techniques may be limited. For example, the energy consumption for receiving and processing the positioning reference signals can be significant. For example, the overall transmission capacity may be reduced by PRS transmissions.

Document WO 2018/070913 A1 discloses a method for use in a wireless device that is configured as a Narrowband Internet-of-Things (NB-IoT) device or a machine-type- communication (MTC) device. The method comprises determining at least one parameter related to positioning. The at least one parameter is based on a capability of the wireless device that relates to observed time difference of arrival (OTDOA) positioning with NB-IoT or MTC. The method further comprises using the determined at least one parameter related to positioning.

### SUMMARY

Therefore, a need exists for advanced resource allocation techniques. In particular, a need exists for such techniques which overcome or mitigate at least some of the above identified drawbacks and restrictions.

According to an example, a method of operating a network node of a communications network comprises obtaining one or more positioning conditions of a wireless communication device. Furthermore, according to the method, a positioning reference signal resource allocation for positioning reference signals is selected from a set of positioning reference signal resource allocations based on the one or more positioning conditions of the wireless communication device.

Based on the selected positioning reference signal resource allocation, positioning measurements for the wireless communication device may be triggered.

According to an example, a network node of a communications network comprises control circuitry configured to obtain one or more positioning conditions of a wireless communication device. The control circuitry is further configured to select a positioning reference signal resource allocation for positioning reference signals from a set of positioning reference signal resource allocations based on the one or more positioning conditions of the wireless communication device.

According to an example, a computer program product includes program code. The program code can be executed by a control circuitry, for example by at least one processor. Executing the program code by the control circuitry causes the control circuitry to perform a method of operating a network node of a communications network. The method comprises obtaining one or more positioning conditions of a wireless communication device. Furthermore, according to the method, a positioning reference signal resource allocation for positioning reference signals is selected from a set of positioning reference signal resource allocations based on the one or more positioning conditions of the wireless communication device.

According to an example, a computer program includes program code. The program code can be executed by a control circuitry, for example by at least one processor. Executing the program code by the control circuitry causes the control circuitry to perform a method of operating a network node of a communications network. The method comprises obtaining one or more positioning conditions of a wireless communication device. Furthermore, according to the method, a positioning reference signal resource allocation for positioning reference signals is selected from a set of positioning reference signal resource allocations based on the one or more positioning conditions of the wireless communication device.

According to an example, a method of operating a wireless communication device in a communications network comprises transmitting one or more positioning conditions of the wireless communication device to a network node of the communications network. The method comprises furthermore receiving, from the network node, a configuration of a positioning reference signal resource allocation for communicating positioning reference signals.

According to an example, a wireless communication device configured for communicating in a communications network comprises control circuitry configured to transmit one or more positioning conditions of the wireless communication device to a network node of the communications network, and to receive a configuration of a positioning reference signal resource allocation for communicating positioning reference signals.

According to an example, a computer program product includes program code. The program code can be executed by a control circuitry, for example by at least one processor. Executing the program code by the control circuitry causes the control circuitry to perform a method of operating a wireless communication device in a communications network. The method comprises transmitting one or more positioning conditions of the wireless communication device to a network node of the communications network. The method comprises furthermore receiving, from the network node, a configuration of a positioning reference signal resource allocation for communicating positioning reference signals.

According to an example, a computer program includes program code. The program code can be executed by a control circuitry, for example by at least one processor. Executing the program code by the control circuitry causes the control circuitry to perform a method of operating a wireless communication device in a communications network. The method comprises transmitting one or more positioning conditions of the wireless communication device to a network node of the communications network. The method comprises furthermore receiving, from the network node, a configuration of a positioning reference signal resource allocation for communicating positioning reference signals.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates transmission of positioning reference signals from a plurality of radio access nodes of a communications network to a wireless communication device according to various embodiments.
FIG. 2 schematically illustrates a network node of the communications network according to various embodiments.
FIG. 3 schematically illustrates a radio access node of the communications network according to various embodiments.
FIG. 4 schematically illustrates a wireless communication device of the communications network according to various embodiments.
FIG. 5 schematically illustrates a resource mapping of a sequence of subframes of a wireless channel comprising a plurality of resources allocated for transmission of positioning reference signals according to various embodiments.
FIG. 6 schematically illustrates more details of the resource mapping of a subframe of FIG. 5.
FIG. 7 schematically illustrates a resource mapping of a sequence of subframes of a wireless channel comprising a plurality of resources allocated for transmission of positioning reference signals according to various embodiments.
FIG. 8 schematically illustrates more details of the resource mapping of a subframe of FIG. 7.
FIG. 9 is a message sequence chart of a method according to various embodiments.
FIG. 10 is a flowchart of a method according to various embodiments.
FIG. 11 is a flowchart of a method according to various embodiments.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, positioning techniques for mobile wireless communication devices are described. The positioning techniques rely on the transmission of positioning reference signals. The wireless communication devices may be operated in the communications network, for example a wireless cellular communications network. In some examples, DL positioning reference signals are transmitted by one or more radio access nodes, which will be called in general also base stations (BSs), and received by a mobile wireless communication device. While hereinafter the various examples are primarily described in the context of DL positioning reference signals, generally, such techniques may also be applied to uplink (UL) positioning reference signals or to positioning reference signals transmitted from one wireless communication device to another wireless communication device, i.e. positioning reference signals communicated in a sidelink (SL).

The positioning techniques generally enable to track the position of the mobile wireless communication device over the course of time. For this, location data indicative of the position of the mobile wireless communication device may be determined. Based on the location data of the mobile wireless communication device, position-dependent services can be implemented. Examples include geo-messaging, geo-tracking, etc.

In some examples, the positioning techniques described herein may be applied in the Internet of Things (IoT) framework. For example, this may correspond to the 3GPP Enhanced Machine-type Communication (eMTC) or the 3GPP Narrowband Internet of Things (NB-loT) technology: These examples are described in 3GPP RP-161321 "New work item proposal on further enhanced MTC", Ericsson, RAN#72, and RP-161324 "New work item proposal: enhancements of NB-IOT", Vodafone, Huawei, HiSilicon, Ericsson, Qualcomm, RAN#72, respectively. Such techniques in the loT framework typically aim at creating low-cost mobile devices that are power efficient and can operate in extended coverage, e.g., such as inside basements.

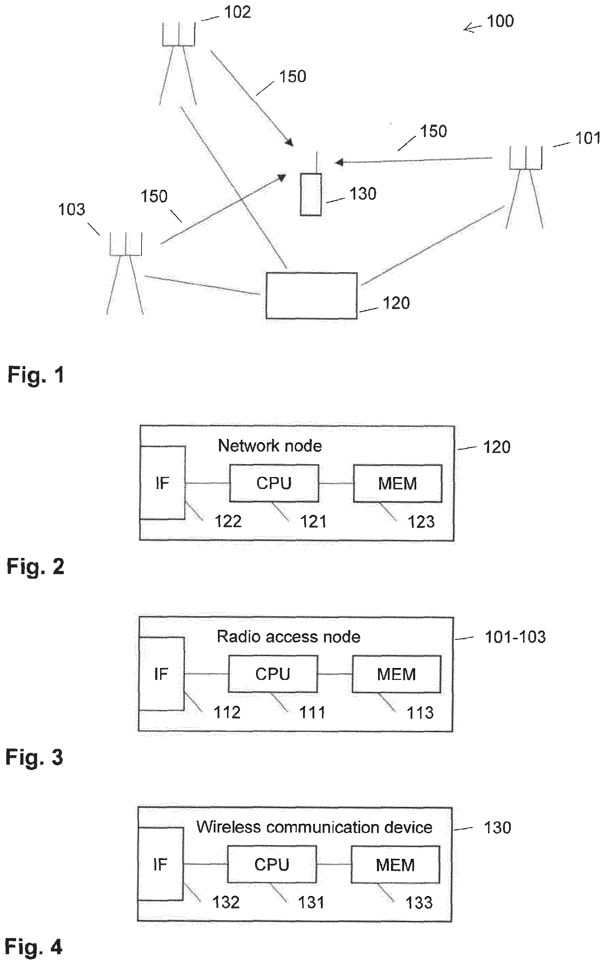

FIG. 1 illustrates aspects with respect to positioning techniques according to various examples. In particular, FIG. 1 illustrates aspects with respect to positioning techniques which rely on communication of DL positioning reference signals 150.

FIG. 1 illustrates the architecture of a cellular communications network 100 according to some example implementations. In particular, the communications network 100 according to the example of FIG. 1 implements the 3GPP LTE and NR architecture. According to 3GPP LTE and NR, a wireless channel is defined according to the evolved UMTS Terrestrial Radio Access (EUTRAN). Such illustration in the 3GPP framework is for exemplary purposes only. Similar techniques can be readily applied to various kinds of 3GPP-specified architectures, such as Global Systems for Mobile Communications (GSM), Wideband Code Division Multiplex (WCDMA), General Packet Radio Service (GPRS), Enhanced Data Rates for GSM Evolution (EDGE), Enhanced GPRS (EGPRS), Universal Mobile Telecommunications System (UMTS), and High Speed Packet Access (HSPA), and corresponding architectures of associated cellular networks. In particular, such techniques may be applied in 3GPP NB-loT or eMTC systems. Furthermore, respective techniques may be readily applied to various kinds of non-3GPP-specified architectures, such as Bluetooth, satellite communication, IEEE 802.11x Wi-Fi technology, etc.

In FIG. 1, a mobile wireless communication device 130 can receive DL positioning reference signals 150 transmitted by each one of a plurality of radio access nodes 101 - 103. In the 3GPP LTE architecture, the radio access nodes 101 - 103 are implemented as evolved Node B's (eNBs). In the 3GPP NR architecture, the radio access nodes 101 - 103 are implemented as next generation Node B's (gNBs). The positioning reference signals 150 transmitted by different radio access nodes 101 - 103 may be orthogonal with respect to each other, e.g., spatially separated and/or orthogonal in time-domain, frequency-domain, and/or code-domain. This mitigates interference.

To facilitate positioning of the mobile wireless communication device 130, the mobile wireless communication device 130 is typically time-synchronized with one or more of the radio access nodes 101 - 103. E.g., the serving radio access node 101 - 103 can be time-synchronized with the mobile wireless communication device 130. Optionally, the radio access nodes 101 - 103 are also time-synchronized with respect to each other, in particular in connection with implementing OTDOA techniques.

The mobile wireless communication device 130 may be one of the following: a smartphone; a cellular phone; a table; a notebook; a computer; a smart TV; a MTC device; an eMTC device; an loT device; an NB-loT device; etc.

Positioning reference signals may generally correspond to well-defined symbols transmitted via the wireless channel. The positioning reference signals may be encoded according to predefined rules. The positioning reference signals may have a well-defined amplitude and/or symbol value. Based on such well-defined properties of the positioning reference signals, it is possible to determine the time of arrival (TOA) of the positioning reference signals. Various examples of positioning reference signals are conceivable. For example, in some examples, the positioning reference signals may be encoded based on a certain sequence code. In some examples, the sequence code may have a dependency on the time-frequency position of the particular resource used for transmission of the positioning reference signal 150 via the wireless channel. In some examples, the sequence code may have a dependency on an identity of the transmitting radio access node, e.g., a cell identifier (cell ID). Thereby, the positioning reference signals 150 may be indicative of the respective radio access node 101 - 103. In some examples, the sequence code may have a dependency on the transmission frame which includes the resource allocated for transmission of the respective positioning reference signal 150: e.g., this may result in positioning reference signals 150 communicated in different transmission frames to be encoded differently. Thereby, the positioning reference signals may be indicative of the respective transmission frames. In some examples, the positioning reference signals may be scheduled specifically for a given mobile wireless communication device 130. Different mobile wireless communication devices 130 may be associated with different positioning reference signals at different positioning occasions.

Furthermore, in FIG. 1, a network node 120 of the cellular communications network 100 is shown, which may be implemented by a server. The network node 120 may perform various tasks with respect to positioning of the mobile wireless communication device 130. Therefore, the network node 120 may be considered as a location server or simply server. The functionality provided by the network node 120 may be implemented by a separate server, for example a location server, or it may be implemented by one or more of the radio access nodes 101 - 103.

A first task that may be assigned to the network node 120 may correspond to scheduling of the communication of the positioning reference signals 150. Here, the network node 120 may implement resource mappings specifying the resources allocated for transmission of the positioning reference signals 150 at each one of the radio access nodes 101 - 103. Different radio access nodes 101 - 103 may thus be associated with different resource mappings: thus, different radio access nodes 101 - 103 may employ different resources for transmission of the positioning reference signals 150.

A second task that may be assigned to the network node 120 may correspond to implementing the timing schedule for repeated transmission of a sequence of subframes which include the positioning reference signals 150 at each one of the radio access nodes 101 - 103. Different radio access nodes 101 - 103 may use different timing schedules, including different repetition rates and/or lengths of the sequences of subframes.

A third task that may be assigned to the network node 120 may correspond to determining location information based on positioning information provided by the mobile wireless communication device 130. Here, it is possible that the positioning information provided by the mobile wireless communication device 130 is indicative of a TDOA or RSTD of the positioning reference signals 150 received from each one of the radio access nodes 101 - 103 with respect to the positioning reference signals 150 received from a reference radio access node 101 - 103. Then, the network node 120 can perform trilateration or multilateration taking into account the positioning information, as well as predefined positions of the radio access nodes 101 - 103, e.g., defined with respect to the reference radio access node. Based on the trilateration or multilateration, the location of the mobile wireless communication device 130 with respect to the radio access nodes 101 - 103 may be determined. The location information can be indicative of the determined position of the mobile wireless communication device 130.

The tasks described above can be combined with each other.

FIG. 2 schematically illustrates aspects with respect to the network node 120. The network node 120 includes a processor 121, an interface 122, and a memory 123. It is possible that the memory 123 stores program code that may be executed by the processor 121. The processor 121 and the memory 123 may constitute control circuitry of the network node 120. Executing the program code can cause the processor 121 to perform various tasks with respect to positioning of the mobile wireless communication device 130. Such tasks may include selection of positioning reference signal resource allocation for positioning reference signals, the scheduling of the communication of the positioning reference signals 150, determining timing schedules for repetitive transmission of sequences of subframes including positioning reference signals 150, as well as the determining of the location information based on positioning information indicative of the TDOAs provided by the mobile wireless communication device 130. The processor 121 may exchange messages with the radio access nodes 101 - 103, as well as with the mobile wireless communication device 130 via the interface 122.

FIG. 3 schematically illustrates aspects with respect to the radio access nodes 101 - 103. The value access nodes 101 - 103 each include a processor 111, an interface 112, and a memory 113. The processor 111 and the memory 113 may constitute control circuitry of the radio access node. It is possible that the memory 113 stores program code that may be executed by the processor 111. Executing the program code can cause the processor 111 to perform various tasks with respect to positioning of the mobile wireless communication device 130. Such tasks may include communicating the positioning reference signals 150 in accordance with the respective resource mapping which includes resources allocated for transmission of the positioning reference signals 150. Such tasks may further include communicating the positioning reference signals 150 in the sequence of subframes. The timing of the sequence of subframes may be defined by the respective timing schedule. Such tasks may further include the encoding of the positioning reference signals 150 according to a certain sequence code. The interface 112 may be configured to transmit DL signals and receive UL signals via the wireless channel.

FIG. 4 schematically illustrates aspects with respect to the mobile wireless communication device 130. The mobile wireless communication device 130 includes a processor 131, an interface 132, and a memory 133. The processor 131 and the memory 133 may constitute control circuitry of the mobile wireless communication device 130. It is possible that the memory 133 stores program code that may be executed by the processor 131. Executing the program code can cause the processor 131 to perform various tasks with respect to positioning of the mobile wireless communication device 130. Such tasks include communicating the positioning reference signals 150 in accordance with the resource mapping which includes resources allocated for transmission of the positioning reference signals 150. The mobile device may receive positioning reference signals 150 from different radio access nodes 101 - 103; different radio access nodes 101 - 103 may use different resource mappings. Such tasks may further include decoding of the positioning reference signals 150 according to a certain sequence code. The interface 132 may be configured to receive DL signals and transmit UL signals via the wireless channel.

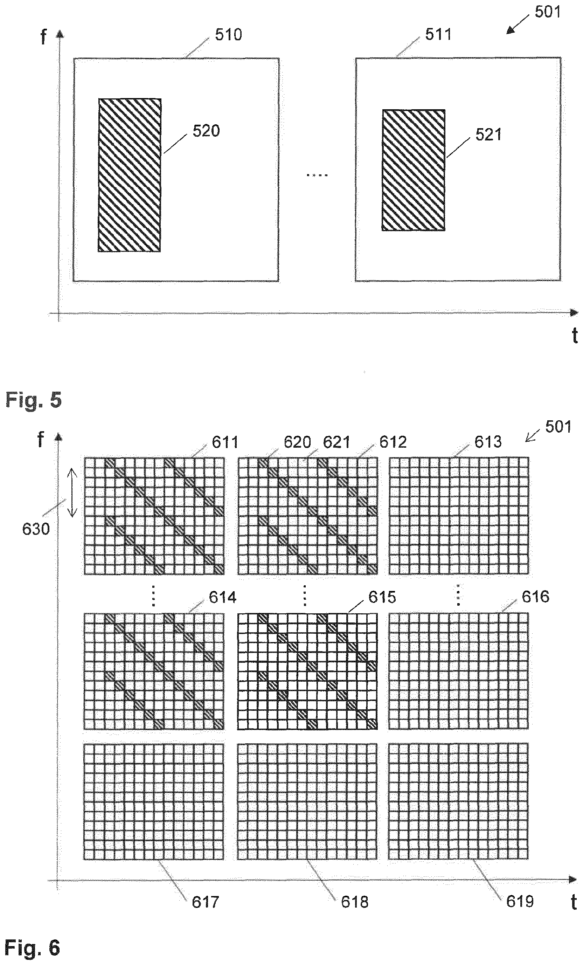

FIG. 5 illustrates aspects with respect to a resource mapping 501 of the wireless channel. FIG. 5 illustrates a resource mapping 501 used for transmission of DL positioning reference signals 150 from a given radio access node 101-103 to the mobile wireless communication device 130.

The resource mapping 501 includes a plurality of subframes 510 and 511. Each subframe includes a plurality of resource blocks. Resource blocks which include resources which may be used for transmission of DL positioning reference signals 150 are indicated as dashed areas 520, 521 in FIG. 5. A more detailed view of the resource mapping 501 showing only a part of the subframe 510 is shown in FIG. 6.

As shown in FIG. 6, the subframe 510 comprises a plurality of resource blocks 611-619. Each resource block 611-619 may be defined by a time slot position in the time domain and a subcarrier (frequency range) in the frequency domain. Typically, the bandwidth of the wireless channel includes a plurality of subcarriers. Each resource block 611-619 includes a plurality of resources, represented by the squares in each resource block 611-619 in FIG. 6. Two of the resources are indicated by reference signs 620 and 621.

The resource mapping 501 includes a plurality of time-frequency resources 620, 621. The various resources 620, 621 can be orthogonal with respect to each other. In an example, a resource 620, 621 may relate to a symbol encoded by a Orthogonal Frequency Division Multiplexing (OFDM) subcarrier. Sometimes, a resource 620, 621 may be referred to as a resource element.

The resource mapping 501 further defines some of the resources 620 to be allocated for transmission of the DL positioning reference signals 150. In FIG. 6, the respective resources 620 are illustrated with a dashed filling. Other resources 621 are not allocated for transmission of the DL positioning reference signals 150, and such resources 621 may be allocated for transmission of control data, payload data, other reference signals, etc. In some examples, it is also possible that resources 621 in the vicinity of resources 620 allocated for positioning reference signals 150 do not carry data to mitigate interference. For example, other resources 621 may be used by other radio access nodes for transmission of DL positioning reference signals 150.

The position of the respective resources 620 allocated for communication of a positioning reference signal 150 may be defined with respect to the subframe 510. The subframe 510 is a particular implementation of the transmission frame of the wireless channel. In other examples, the position of the respective resource 620 allocated to communication of a positioning reference signal 150 may, alternatively or additionally, be defined with respect to a frame comprising a plurality of subframes 510, 511 and/or with respect to the time slot being part of a subframe. In an example implementation, the duration of the subframe 510 may be 1 millisecond. The subframe 510 may include two time slots, each of 0.5 milliseconds duration. The frame may include a plurality of subframes 510, 511, e.g., a count of ten subframes 510, 511. The subframe 510 may supports various numerologies (e.g. sub-carrier spacing, cyclic prefix length). The subframe 510 with 15 kHz carrier spacing may include two time slots. In case the sub-carrier spacing is 30 kHz then the subframe 510 may include four time slots.

In the example of FIG. 6, the position of the respective resource 620 allocated to the communication of the positioning reference signal 150 is furthermore defined with respect to the resource block 612. The resource block 612 includes a plurality of resources. Typically, the bandwidth of the wireless channel includes a plurality of resource blocks 611-619, e.g., two resource blocks, ten resource blocks, fifty resource blocks, or even hundred resource blocks.

To mitigate inter-BS interference, it is possible that the particular resources 620 allocated for communication of the positioning reference signals 150 are varied from radio access node 101 - 103 to radio access node 101 - 103. Thus, different radio access nodes 101 - 103 may employ different resources 620.

Typically, a higher accuracy may be achieved for determining the position of the mobile wireless communication device 130 if a larger count of positioning reference signals 150 is communicated from each participating radio access node 101 - 103 to the mobile wireless communication device 130. This is why a plurality of resources 620 are allocated for transmission of the positioning reference signals 150 per subframe 510, 511. For example, the count of resources 620 allocated for transmission of the positioning reference signals 150 with respect to the total count of resources 620, 621 in the subframe 510, 511 may define a time-frequency density of the positioning reference signals 150. The time-frequency density may be defined with respect to a resource block 611-619 and/or may be defined with respect to the system bandwidth of the wireless channel. Typically, a higher time-frequency density of the positioning reference signals 150 results in a higher accuracy for determining the position of the mobile wireless communication device 130.

In FIG. 6, a frequency offset 630 between simultaneously communicated positioning reference signals 150 is illustrated. Often, a smaller frequency offset 630 will result in a higher time-frequency density of the positioning reference signals 150.

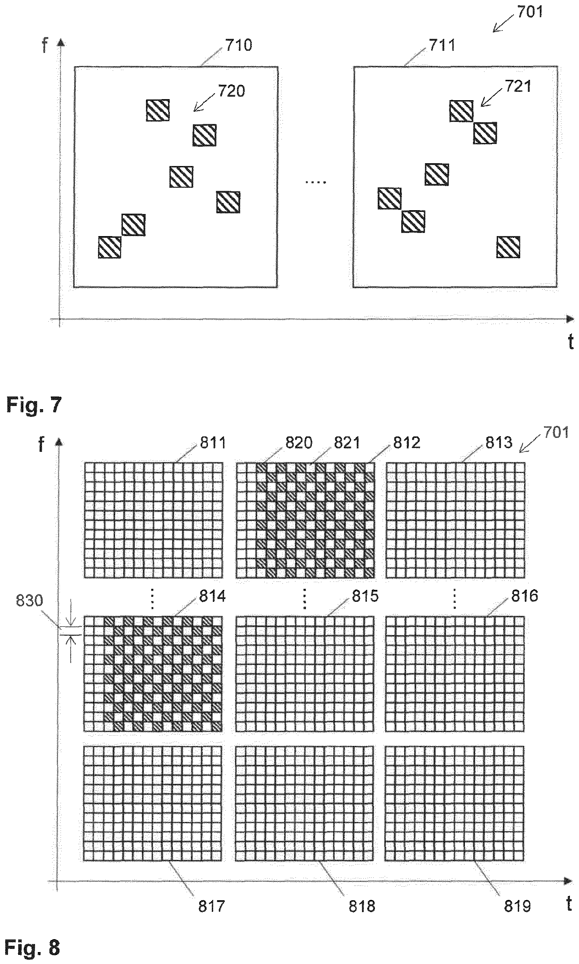

FIG. 7 illustrates aspects with respect to a further resource mapping 701 of the wireless channel. FIG. 7 illustrates a resource mapping 701 used for transmission of DL positioning reference signals 150 from a given radio access node 101-103 to the mobile wireless communication device 130.

The resource mapping 701 includes a plurality of subframes 710 and 711. Each subframe includes a plurality of resource blocks. Resource blocks which include resources which may be used for transmission of DL positioning reference signals 150 are indicated as dashed areas 720, 721 in FIG. 7., compared to the resource mapping 501 of FIGs. 5 and 6, the resource mapping 701 uses a frequency hopping of the resource blocks such that the resource blocks including resources for the transmission of positioning reference signals do not use the same subcarriers within a subframe 710, 711. This may mitigate inter-subframe interference. A more detailed view of the resource mapping 701 showing only a part of the subframe 710 is shown in FIG. 8.

As shown in FIG. 8, the subframe 810 comprises a plurality of resource blocks 811-819. Each resource block 811-819 may be defined by a time slot position in the time domain and a subcarrier (frequency range) in the frequency domain. Each resource block 811-819 includes a plurality of resources, represented by the squares in each resource block 811-819 in FIG. 8. Two of the resources are indicated by reference signs 820 and 821.

The resource mapping 701 further defines some of the resources 820 to be allocated for transmission of the DL positioning reference signals 150. In FIG. 8, the respective resources 820 are illustrated with the dashed filling. Other resources 821 are not allocated for transmission of the DL positioning reference signals 150, and such resources 821 may be allocated for transmission of control data, payload data, other reference signals, etc. In some examples, it is also possible that resources 821 in the vicinity of positioning reference signals 150 do not carry data to mitigate interference. For example, other resources 821 may be used by other radio access nodes for transmission of DL positioning reference signals 150.

The position of the respective resources 820 allocated for communication of a positioning reference signal 150 may be defined as described above in connection with the resources 620.

In the example of FIG. 8, the position of the respective resource 820 allocated to the communication of the positioning reference signal 150 is furthermore defined with respect to the resource block 812.

As explained above, typically, a higher accuracy may be achieved for determining the position of the mobile wireless communication device 130 if a larger count of positioning reference signals 150 is communicated from each participating radio access node 101 - 103 to the mobile wireless communication device 130. Compared to the mapping 501 of FIGs. 5 and 6, mapping 701 provides a significantly higher number of resources 820 allocated for transmission of the positioning reference signals 150 per resource block 812, 814. The time-frequency density may be defined with respect to a resource block 811-819 and/or may be defined with respect to the system bandwidth of the wireless channel. Typically, a higher time-frequency density of the positioning reference signals 150 results in a higher accuracy for determining the position of the mobile device 130.

In FIG. 8, a frequency offset 830 between simultaneously communicated positioning reference signals 150 is illustrated, which is much smaller than the frequency offset 630 in FIG. 6. Often, a smaller frequency offset 630 will result in a higher time-frequency density of the positioning reference signals 150. This may enable a low latency for performing positioning of the wireless communication device 130. Furthermore, high positioning accuracy may be achieved in short time such that power consumption for positioning may be reduced in the wireless communication device 130, for example by achieving longer power down times of receivers in the wireless communication device between occurrence of positioning procedures.

Various techniques described herein are based on the finding that an accuracy of the positioning of the mobile wireless communication device tends to be lower if the bandwidth covered by the resources 620, 820 allocated for transmission of positioning reference signals 150 is restricted. For example, in the 3GPP LTE technology, the sampling rate of a symbol is dependent upon the bandwidth of the wireless channel. A higher sampling rate typically results in a finer measure of the TOA and hence a more accurate determination of the distance between the respective radio access node 101 - 103 and the mobile wireless communication device 130. Therefore, the accuracy is dependent on the bandwidth.

On the other hand, various techniques described herein are based on the finding that for wireless channels designed for loT applications, the system bandwidth - and with it the bandwidth for transmission of the positioning reference signals 150 - is typically limited. For example, according to 3GPP NB-loT, the system bandwidth is limited to a single resource block 611-619 and thus amounts to 180 kHz. For example, according to 3GPP eMTC, the system bandwidth is limited to six resource blocks 611-619 and thus amounts 1.4 MHz.

Furthermore, for machine type communication, coverage enhancements by use of repetitions may be introduced, also for positioning. Due to the very long periodicity of the positioning reference signal occasions and the narrow bandwidth (e.g. 1.4MHz with 1280 ms periodicity), the time for a positioning could be very long, which may result in long latency.

In the following, techniques will be described which enable multiple and adaptive positioning reference signal resource allocations for wireless communication devices of various kinds, in different operating states and scenarios while utilizing the spectrum and resources efficiently. This is accomplished by a dynamic allocation technique taking into account - e.g., semi-statically - one or more of properties, preferences, parameters, states, and/or constraints of the involved wireless communication devices 130 as well as measured channel properties and a concept of grouping wireless communication devices with similar characteristics/capabilities for less overhead resource allocations. In the following, the one or more of properties, preferences, parameters, states and/or constraints of the involved wireless communication devices will be called "positioning conditions".

According to examples, the positioning conditions of the wireless communication devices may be reported to the network combined with measurements for adaptive group wise control of the positioning reference signal resource allocation. The control of the positioning reference signal resource allocation may be combined with a weighting functionality based on tables and/or likelihood estimations or possibly also artificial intelligence (Al) control.

Briefly, the techniques may be summarized as follows. The radio access nodes 101-103 may be configured to support multiple positioning reference signal resources / positioning reference signal resource set configurations that can be activated/deactivated. It is possible that each of the resources has its own configuration and an identity (ID). The positioning conditions may reflect the type of the wireless communication device (in terms of e.g. supported bandwidth, power consumption), resource characteristics (e.g. beam configuration) and/or positioning requirements (accuracy, latency). Each wireless communication device may be assigned to a respective group of wireless communication devices that share the same positioning reference signal resources. By such techniques, a wireless communication device having certain positioning conditions can be allocated positioning reference signal resources that are tailored to its needs. In an example implementation, a positioning protocol (e.g. LPP, LPPa/NRPPa) may be designed to accommodate these multiple positioning reference signal resources/configurations, e.g., accommodate scheduling messages associated therewith. The availability of one or more positioning reference signal resource allocations may be communicated, for example broadcasted, to the wireless communication device and optionally further wireless communication devices. The wireless communication device may select / combine among those positioning reference signal resources of the available allocations for positioning measurement purpose. When combining the positioning reference signal resources the wireless communication device may achieve lower latency to positioning, better accuracy and/or lower power consumption.

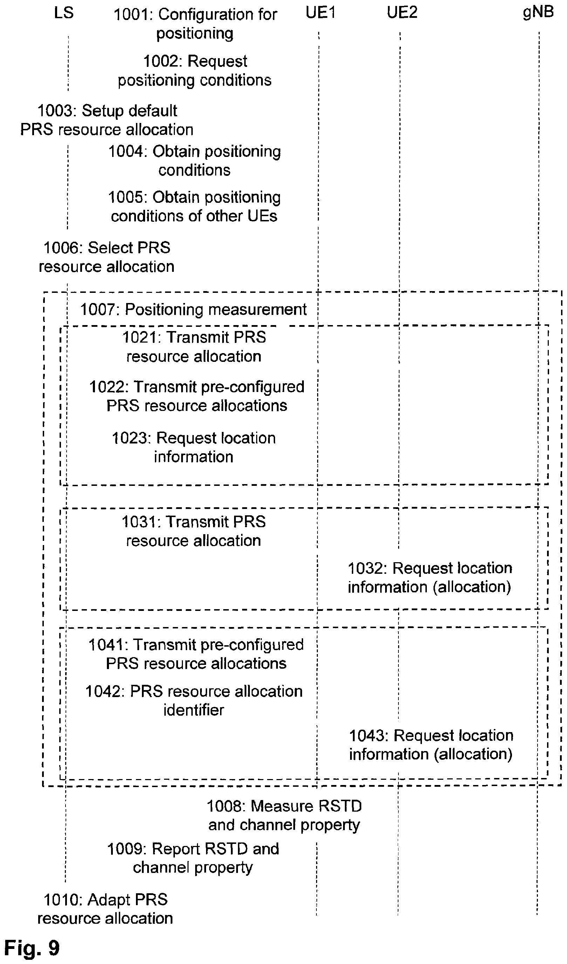

In connection with FIG. 9 the above techniques will be described in more detail.

In block 1001, a network node 120 may configure one or more radio access nodes (gNB) for positioning, e.g. enabling transmission of positioning reference signals. For example the network node 120 may comprise a network location server (LS) which is configured to determine and adapt the aforementioned multiple positioning reference signal resource allocations.

In block 1002, the network node 120 may request positioning conditions from one or more wireless communication devices 130 (UE1, UE2). Furthermore, the network node 120 may transmit a configuration for positioning to the one or more wireless communication devices 130 (UE1, UE2).

In block 1003, the network node 120 may set up a default configuration for resources for positioning reference signals.

In block 1004, the wireless communication device (UE1) sends semi-static positioning conditions to the location server (LS), e.g. in response to the request received in block 1002. The positioning conditions are considered to be semi-static as they do not depend on the current channel conditions and are therefore static in view of the communications network 100. On the other hand, depending on an application running on the wireless communication device, the positioning conditions may be non-static, for example with respect to latency and accuracy. In other words, the semi-static position conditions may be static for a large number of positioning events or a long time in which positioning events occur, for example for several minutes or even hours. For example, the semi-static positioning conditions may be transmitted to the location server using the LPP protocol defined in LTE technologies. The configuration can be transmitted together with the existing LPP Capability Response from the wireless communication device to the location server, but can as well be reported in any other signal or LPP message sent before positioning is initiated. However, the semi-static parameters could also be reconfigured while the positioning already is initiated. The location server may handle the reconfiguration of the device and may consider assigning the device to another group. Typical semi-static positioning conditions may comprise any parameter affecting the system properties of a wireless communication device. Some examples are listed below.
- Accuracy in terms of meters or a time for horizontal or vertical directions. Also accuracy values could be quantized and grouped into accuracy groups for reduced signaling overhead. A range may set the accuracy needed for the wireless communication device, for example an accuracy of less than 2 m horizontal error.
- Latency expressed as the time to perform positioning in seconds or lower level entities such as for example a maximum number of repetitions of positioning reference signal transmissions allowed. A further example may relate to the time required from triggering the positioning measurement request to receiving the positioning measurement. Latency can also be expressed as end-to-end latency or radio-interface latency.
- Mobility defined for example by some classifications. It could be a rough indication if the wireless communication device is stationary or non-stationary reducing the need of positioning occasions that might be required. For example, the mobility may indicate if it is a wireless communication device capable of moving at high-speed (for example in a train or car) or low speed (for example tracking a product in a factory) or if the device operates in a limited geographic environment as for example a facility of any kind.
- Supported bandwidth of the mobile communication device for receiving positioning reference signals.
- Power consumption critical devices could indicate that they need special care with regards to power. When scheduled, this information could be weighted together with other properties such as accuracy, latency and mobility to find a better positioning reference signal resource allocation for the wireless communication device and the communications system. For example, the frequency/density of positioning measurements could be adopted or extra care could be taken to schedule them together with other communication activities. This may be especially important in non RRC connected mode state where wake up and start up of the wireless communication device will happen at each measurement occasion. For example, a control circuitry and a radio interface of the wireless communication device may be at least partially powered down during periods with no wireless communication or low computational efforts. Synchronizing periods with no wireless communication and low computational effort may avoid excessive startup and close down times. Saving startup and close down times may save energy. Furthermore, also a low number of allocated resources may reduce the required processing and thus save power. Power consumption may also be reduced in case the wireless communication device has to listen with its radio receiver to a narrow bandwidth only.

In another example, for the wireless communication device a positioning with high accuracy may be needed and a large number of PRS resources is allocated. In this case, it may be beneficial to allocate the PRS resources with a bandwidth as wide as possible from a power perspective to reduce the radio/baseband - on time.

The location server (LS) may collect positioning conditions from several or all wireless communication devices in the communications network. For example, in block 1005, the location server (LS) may obtain positioning conditions from another wireless communication device, for example from UE2.

In some examples, the semi-static positioning conditions do not have to originate from the wireless communication device itself. The semi-static positioning conditions may also originate from an application layer, for example a positioning application performed in a cloud or server connected to the communications network, that requires specific positioning conditions.

As described above (block 1003), the location server (LS) may set up a default configuration for positioning reference signal resource allocations. The default configuration may comprise a set of positioning reference signal resource allocations which is associated with a radio access technology of the communication between the communications network, for example radio access nodes of the communications network, and the wireless communication devices operated in the communications network. I.e., for one and the same radio access technology - e.g., 3GPP NR, or 3GPP NB-loT, etc. - there may be multiple positioning reference signal reference resource allocations available. Exemplary positioning reference signal resource allocations of the set of positioning reference signal resource allocations were discussed above in connection with FIGs. 5 to 8. In block 1006, the location server (LS) may select, based on the received positioning conditions, an appropriate positioning reference signal resource allocation from the set of positioning reference signal resource allocations. Additionally or as an alternative, the location server (LS) may adapt/update a (selected) positioning reference signal resource allocation based on the received positioning conditions. For example, if a wireless communication device requires a higher accuracy, positioning reference signal resources may be allocated which cover a wide bandwidth and/or may be observed longer in time. More resources combined with same channel conditions will increase SNR / SINR and thereby improve accuracy.

In block 1007, positioning measurements are triggered based on the selected positioning reference signal resource allocation. In some examples, the selected positioning reference signal resource allocation is signaled to some or all wireless communication devices. In some examples the selected positioning reference signal resource allocation can also be signaled to a specific wireless communication device that is scheduled for RSTD measurements. This may be accomplished by use of a positioning protocol, for example LPP, or by use of a control channel or a combination thereof to achieve a trade-off between signaling overhead and latency. The selected positioning reference signal resource allocation may be communicated by indicating the allocated resources as described above in connection with FIGs. 5 to 8, e.g. with respect to resource blocks or subframes. In other examples, each of the set of positioning reference signal resource allocations may comprise an identifier or index and the selected positioning reference signal resource allocation may be communicated by indicating the corresponding identifier or index.

Referring to the examples described above in connection with FIGs. 5 to 8, one wider bandwidth configuration more sparsely allocated (FIGs. 5 and 6) and one more narrow machine type like configuration (FIGs. 7 and 8) with more dense allocation and longer duration in time and using frequency hopping may be provided. Parameters for defining the allocation are for example slot offset start, slot, subframe number (SFN), duration from start, periodicity, hop information, etc.. It may be noted that the start and stop of the positioning reference signal resource allocations do not have to be slot boundaries.

The location server (LS) may transmit in block 1021 the selected positioning reference signal resource allocation to one or more radio access nodes (gNB). In other examples, in block 1022, the location server (LS) may transmit the preconfigured positioning reference signal resource allocations to one or more wireless communication devices (UE1), using for example assistance data of a positioning protocol, for example LPP. Then, the location server (LS) may request in block 1023 location information from the wireless communication devices (UE1). A positioning protocol, for example LPP, may be utilized for transmitting the request in block 1023.

In other examples, the location server (LS) may transmit in block 1031 the selected positioning reference signal resource allocation to one or more radio access nodes (gNB). In block 1032 the radio access node (gNB) may transmit a request for location information to one or more wireless communication devices (UE1). The request may include an indication of the selected positioning reference signal resource allocation. A control channel may be utilized for transmitting the selected positioning reference signal resource allocation and the request in blocks 1031 and 1032.

In other examples, in block 1041, the location server (LS) may transmit the preconfigured positioning reference signal resource allocations to one or more wireless communication devices (UE1), using for example assistance data of a positioning protocol, for example LPP. In block 1042, the location server (LS) may transmit an index or identifier of the selected positioning reference signal resource allocation to one or more radio access nodes (gNB). In block 1043, the radio access node (gNB) may transmit a request for location information to the wireless communication device (UE1), for example using a control channel. The request may include the index or identifier of the selected positioning reference signal resource allocation.

The wireless communication device (UE1) may perform positioning measurement in block 1008, for example by measuring RSTD based on the positioning reference signals transmitted in the allocated positioning reference signal resources. Additionally, for example if requested or enabled, the wireless communication device (UE1), may perform channel measurements and report the channel measurements as dynamic channel property parameter(s) to the location server (LS). Those measurement results will be used to adapt the positioning reference signal resource allocation in faster way if compared to the allocation based on the semi-static positioning conditions described above. Parameters to measure can be signal to noise/interference ratio (SNR), reference signal received power levels (RSRP), and measurement quality. The reporting may be configured to support beams i.e. measurement values may be reported per beam. The measurement data may be tagged with the positioning reference signal resource that was used for the reception and for the measurement, for example by the identifier or index. Reports can be triggered for each positioning reference signal occasion or collected and filtered over longer set of periods.

In block 1009 the RSTD and the channel properties are reported from the wireless communication device (UE1) to the location server (LS). The RSTD may include an indication concerning the positioning reference signal resources involved in the RSTD determination (for example by indicating the corresponding identifier or index). A more sparse reporting interval could be considered together with filtering.

The location server (LS) may adapt in block 1010 the positioning reference signal resource allocation based on the received channel property. The location server (LS) may send updates on positioning reference signal resource allocation to one or more radio access nodes of the communications network. Adapting the positioning reference signal resource allocation can mean: using the initial positioning reference signal resource allocation as a baseline and adjusting, starting from the baseline, the allocation.

In some examples, the location server (LS) combines the semi-static positioning conditions from the wireless communication devices together with the more dynamic measurement data (channel properties) with the purpose of being able to allocate positioning reference signal resources adapted for the active wireless communication devices. The location server (LS) may have a capability to signal designated radio access nodes (gNBs) to activate/deactivate configurations of additional reference signal resources. This may update the existing positioning reference signal resource configuration(s) or add extra temporary resources. Based on these information, multiple positioning reference signal resources can be allocated in one or more radio access nodes.

The method may continue in block 1007 with triggering next positioning measurements. In other examples, the method may continue in block 1002 for getting updated information on the semi-static positioning conditions.

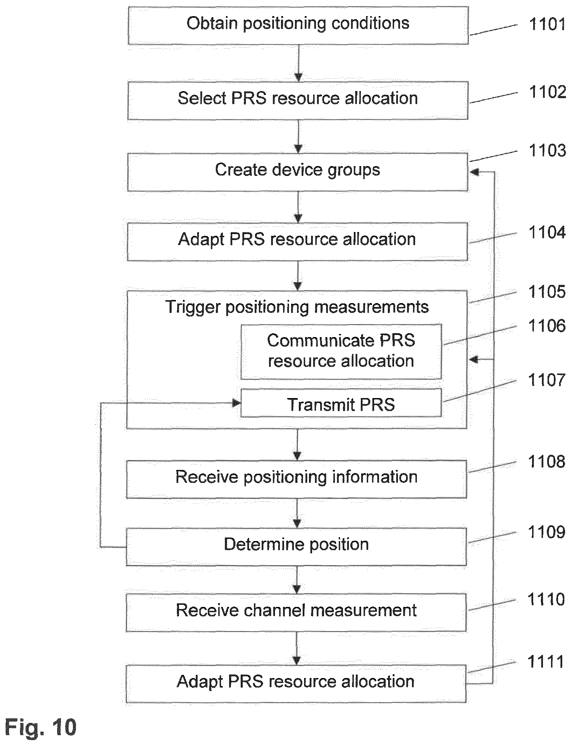

FIG. 10 is a flowchart of a method according to various examples. The method according to FIG. 10 illustrates various aspects with respect to positioning of a mobile wireless communication device, e.g., the mobile wireless communication device 130. The method steps illustrated in FIG. 10 may be performed by a network node of the communications networks 100, for example by the location server 120. However, the functionality of the method steps illustrated in FIG. 10 may be provided by other the components, devices or nodes of the communications network 100, for example by the radio access nodes 101-103 or a combination of the server 120 and the radio access nodes 101-103.

In block 1101, the network node 120 obtains one or more positioning conditions of a wireless communication device, for example of one or more of the wireless communication devices 130. The positioning conditions may include one or more preferences, constraints, configurations and/or states of the corresponding communication device 130. The one or more positioning conditions may be received directly from the corresponding communication device 130 or may be received via the radio access nodes 101-103 from the corresponding communication device 130. In other examples, the positioning conditions concerning the wireless communication device 130 may be received from an application layer, for example a positioning application performed in a cloud or server connected to the communications network 100, or an application on the wireless communication device, or an edge computing application on the device side.

In some example, the one or more positioning conditions may comprise one or more semi-static information elements. Preferences, constraints, configurations and/or states which do not depend on environmental influences of the wireless communication device, but only on device inherent conditions, may be considered as semi-static information elements. The positioning conditions may comprise an accuracy constraint on the positioning of the wireless communication device. Additionally or as an alternative, the positioning conditions may comprise a latency constraint on the positioning of the wireless communication device. Furthermore, the positioning conditions may comprise an energy consumption constraint of the wireless communication device. In further examples, the one or more positioning conditions may comprise a mobility level of the wireless communication device indicating for example a maximum speed with which the wireless communication device is moving, whether a geographic location of the wireless communication device is restricted or not, or that the device is stationary.

In other examples, the one or more positioning conditions may comprise one or more dynamic information elements. Positioning conditions, which depend on environmental influences of the wireless communication device may be considered as dynamic information elements. The positioning conditions may comprise a channel measurement report. The channel measurement report may contain measurement information of a radio channel which is used for communicating positioning reference signals. The one or more dynamic information elements may comprise for example a signal to noise ratio of the received positioning reference signals, a signal to interference plus noise ratio of the received positioning reference signals, a received power level of the received positioning reference signals, a measurement quality of the received positioning reference signals, a standard deviation of any one of the preceding dynamic information elements, a correlation peak width and power of the received positioning reference signals and/or an estimated accuracy of a positioning information determined based on the received positioning reference signals.

In block 1102, the network node 120 selects a positioning reference signal resource allocation for positioning reference signals from a set of positioning reference signal resource allocations based on the one or more positioning conditions of the wireless communication device 130.

According to some examples, a positioning reference signal resource allocation comprises a timing information for communicating positioning reference signals, a frequency information for communicating positioning reference signals and/or spatial information for communicating positioning reference signals. In some examples of, the positioning reference signal resource allocation comprises a combination of the above information. For example, a positioning reference signal resource allocation may comprise an allocation of resources 620, 820 of a resource block 612, 812 of a subframe 510, 710 as described above in connection with FIGs. 5 to 8.

In some examples, the set of positioning reference signal resource allocations may comprise a plurality of allocations each indicating a plurality of resources designated or reserved for the transmission of positioning reference signals. The positioning reference signal resource signal allocations of the set of positioning reference signal resource signal allocations may be associated with a same radio access technology of the communication between the communications network 100 and the wireless communication devices 130. A radio access technology may comprise for example Bluetooth, Wi-Fi, GSM, UMTS, LTE, LTE-M or 5G NR. Thus, the set of positioning reference signal resource allocations includes a plurality of allocations defined within the framework of one radio access technology, and by selecting a positioning reference signal resource allocation from the set of positioning reference signal resource allocations, the positioning reference signal resource allocation is selected for a specific radio access technology. In other words, based on the selection of the positioning reference signal resource allocation from the set of positioning reference signal resource allocations, the resource allocation within the same radio access technology may be altered. The type of radio access technology may not be changed by the selection.

In some examples, the positioning reference signal resource allocation may be selected additionally based on one or more further positioning reference signal resource allocations of one or more further wireless communication devices. For example, the network node 120 may obtain one or more further positioning conditions of further wireless communication devices 101 - 103. When selecting a positioning reference signal resource allocation from the set of positioning reference signal resource allocations, the network node 120 may consider the further positioning conditions obtained from the further wireless communication devices. Thus, the positioning reference signal resource allocation may be optimized for a plurality of wireless communication devices 130 in the communications network 100.

In further examples, in block 1103 the network node 120 may create groups of wireless communication devices. Group members may be selected from the further wireless communication devices and the wireless communication device. The network node 120 may create a group by assigning those wireless communication devices to the group, for which the same positioning reference signal resource allocation is selected. This may increase efficient usage of the available resources for the transmission of positioning reference signals. Further, the network node 120 may also move a wireless communication device from one group to another group, may update group configurations, and may activate or deactivate groups.

In further examples, in block 1104, the positioning reference signal resource allocation, which is selected for the wireless communication devices assigned to the group, may be adapted by the network node 120 based on the one or more positioning conditions of the wireless communication devices assigned to the group. For example, based on a predefined set of positioning reference signal resource allocations, a positioning reference signal resource allocation may be selected for the group, which essentially fits into the preferences, constraints, configurations and states defined in the positioning conditions of the involved wireless communication devices. However, by slightly adapting the selected positioning reference signal resource allocation, this resource allocation may be optimized for use in the group.

In block 1105, the network node 120 may trigger positioning measurements for the wireless communication device 130 based on the selected positioning reference signal resource allocation.

Triggering the positioning measurements may include for example, as shown in block 1106, a transmission of a configuration of the positioning reference signal resource allocation from the network node 120 to one or more of the wireless communication device 130. Furthermore, the network node 120 may transmit the configuration of the positioning reference signal resource allocation to one or more radio access nodes 101-103. Additionally or as an alternative, the radio access nodes 101-103 may transmit the configuration of the positioning reference signal resource allocation to the wireless communication device 130 upon receiving it from the network node 120.

In various examples, the configuration is identified using a predefined configuration-specific identifier or index. A respective codebook may be used.

The wireless communication device may be configured with multiple configurations in advance, and then the one to be used may be indicated with this specific identifier or index.

Triggering the positioning measurements may include triggering the transmission of positioning reference signals using the selected positioning reference signal resource allocation (block 1107). For example, by transmitting the positioning reference signal resource allocation to the radio access nodes 101 to 103, the access node 101 to 103 may start using the allocated positioning reference signal resources for transmitting corresponding positioning reference signals to the wireless communication device 130. The positioning reference signals transmitted by the radio access nodes 101 to 103 to the wireless communication device 130 may comprise downlink positioning reference signals. However, in various examples, the allocated positioning reference signal resources may be used for transmitting uplink positioning reference signals from the wireless communication device 130 to the radio access nodes 101 to 103, or for transmitting sidelink positioning reference signals from one wireless communication device 130 to another wireless communication device.

In various examples of, triggering the positioning measurements may also include transmitting a corresponding message to the wireless communication device to start measuring PSR in the wireless communication device.

In various examples, the positioning reference signal is indicative of the configuration of the selected positioning reference signal resource allocation, indicated for example by an identifier or index.

In some examples, the network node 120 receives from the wireless communication device 130 a report indicative of a channel measurement information related to the received positioning reference signal. The channel measurement information may be indicative of the configuration of the positioning reference signal resource allocation used for transmitting the positioning reference signal. For example, the positioning reference signal resource allocation may comprise a spatial beam configuration for communicating the positioning reference signals. Downlink positioning reference signals may be transmitted from for example the radio access nodes 101 to 103 to the wireless communication device 130 using the beam configuration. In other examples, uplink positioning reference signals transmitted from the wireless communication device 130 may be received at the radio access nodes 101 to 103 using the beam configuration. By including the configuration in the positioning reference signals, measurement reports may be provided per beam.

Based on the positioning reference signals, the wireless communication device 130 may determine TDOA or RSTD as positioning information. In block 1108, the network node 120 may receive the positioning information from the wireless communication device 130, for example directly or via the radio access nodes 101 - 103. Based on the positioning information, the network node 120 may determine in block 1109 a position of the wireless communication device 130.

Further position determinations for the wireless communication device 130 may be performed by continuing the method in block 1107, in which the wireless communication device 130 receives further positioning reference signals for providing further positioning information to the network node 120 in block 1108.

In some examples, the wireless communication device 130 may provide additionally the channel measurement concerning the channel properties of the radio channel via which the positioning reference signals were received. The network node 120 may receive the channel measurement in block 1110. Based on the channel measurement, the network node 120 may adapt the positioning reference signal resource allocation in block 1111.

The adapted positioning reference signal resource allocation may be communicated for further positioning measurements in block 1106. In other examples, the adapted positioning reference signal resource allocation may be used to re-create device groups in block 1103.

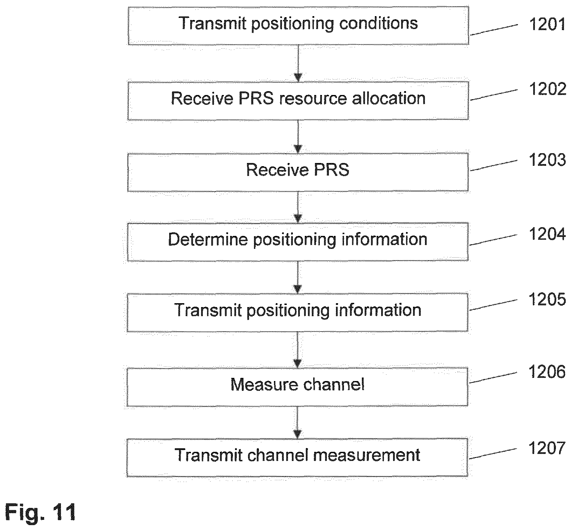

FIG. 11 is a flowchart of a method according to various examples. The method according to FIG. 11 illustrates various aspects with respect to positioning of a mobile wireless communication device, e.g., the mobile wireless communication device 130. The method steps illustrated in FIG. 11 may be performed by one or any number of wireless communication devices, e.g., by one or more of the wireless communication devices 130 of the communication networks 100.

In block 1201, the wireless communication device 130 transmits one or more positioning conditions. The positioning conditions may include preferences, constraints, configurations and states of the wireless communication device 130. The one or more positioning conditions may be transmitted from the wireless communication device 130 directly to the network node 120 or may be transmitted via the radio access nodes 101-103 to the network node 120.

In some examples, the one or more positioning conditions may comprise one or more semi-static information elements. Preferences, constraints, configurations and states which do not depend on environmental influences of the wireless communication device 130, but only on device inherent conditions, may be considered as semi-static information elements. The positioning conditions may comprise an accuracy constraint on the positioning of the wireless communication device 130. Additionally or as an alternative, the positioning conditions may comprise a latency constraint on the positioning of the wireless communication device 130. Furthermore, the positioning conditions may comprise an energy consumption constraint of the wireless communication device 130. In further examples, the one or more positioning conditions may comprise a mobility level of the wireless communication device 130.

In other examples, the one or more positioning conditions may comprise one or more dynamic information elements. Positioning conditions, which depend on environmental influences of the wireless communication device may be considered as dynamic information elements. The positioning conditions may comprise a channel measurement report. The channel measurement report may indicate channel properties and may contain measurement information of a radio channel which is used for transmission of positioning reference signals. The one or more dynamic information elements may comprise for example a signal to noise ratio of the received positioning reference signals, a signal to interference plus noise ratio of the received positioning reference signals, a received power level of the received positioning reference signals, a measurement quality of the received positioning reference signals, a standard deviation of any one of the preceding dynamic information elements, a correlation peak with and power of the received positioning reference signals and/or an estimated accuracy of positioning information determined based on the received positioning reference signals.

Based on the one or more positioning conditions of the wireless communication device 130, the network node 120 may select a positioning reference signal resource allocation for positioning reference signals from a set of positioning reference signal resource allocations.

According to some examples, a positioning reference signal resource allocation comprises a timing information for communicating positioning reference signals, a frequency information for communicating positioning reference signals and/or spatial information for communicating positioning reference signals. In some examples of, the positioning reference signal resource allocation comprises a combination of the above information. For example, a positioning reference signal resource allocation may comprise allocation of resources 620, 820 of a resource block 612, 812 of a subframe 510, 710 as described above in connection with FIGs. 5 to 8.

In block 1202, the wireless communication device 130 receives a configuration of the positioning reference signal resource allocation from the communications network 100, for example from the network node 120 or from the radio access nodes 101 to 103.

In various examples, the configuration is identified using a predefined configuration-specific identifier or index.

Next, in block 1203, the wireless communication device 130 may receive positioning reference signals which are transmitted using the selected positioning reference signal resource allocation. For example, the access nodes 101 - 103 may start using the allocated positioning reference signal resources for transmitting corresponding positioning reference signals to the wireless communication device 130. The positioning reference signals transmitted by the radio access node 101 - 103 to the wireless communication device 130 may comprise downlink positioning reference signals.

However, in various examples, the allocated positioning reference signal resources may be used for transmitting uplink positioning reference signals from the wireless communication device 130 to the radio access nodes 101 to 103, or for transmitting sidelink positioning reference signals from a further wireless communication device to the wireless communication device 130. In this case, triggering positioning measurements may also transmitted to the wireless communication device 134 triggering transmission of uplink or sidelink positioning reference signals.

In various examples, each positioning reference signal is indicative of the configuration of the selected positioning reference signal resource allocation.

Based on the received positioning reference signals, the wireless communication device 130 may determine TDOA or RSTD as positioning information in block 1204. In block 1205, the wireless communication device 130 may transmit the positioning information to the network node 120, for example directly or via the radio access nodes 101 - 103.

In some examples, the wireless communication device 130 may determine channel measurements of the radio channel via which the positioning reference signals were received (block 1206). In block 1207, the wireless communication device 130 may transmit a report indicative of the channel measurement information related to the received positioning reference signal. The channel measurement information may be indicative of the configuration of the positioning reference signal resource allocation which was used for transmission of the positioning reference signal. For example, the positioning reference signal resource allocation may comprise a spatial beam configuration for communicating the positioning reference signals. Downlink positioning reference signals may be transmitted from for example the radio access nodes 101 - 103 to the wireless communication device 130 using the beam configuration. In other examples, uplink positioning reference signals transmitted from the wireless communication device 130 may be received at the radio access nodes 101 to 103 using the beam configuration. By including the configuration in the positioning reference signals, measurement reports may be provided per beam and may indicate the configuration of the used positioning reference signal resource.

The invention is described by the appended claims.

## Claims

1. A method of operating a network node of a communications network, the method comprising:
- obtaining (1101) one or more positioning conditions of a wireless communication device (130),
- selecting (1102) a positioning reference signal resource allocation for positioning reference signals (150) from a set of positioning reference signal resource allocations based on the one or more positioning conditions of the wireless communication device (130) and based on one or more further positioning reference signal resource allocations of one or more further wireless communication devices, and
- creating (1103) a group by assigning those wireless communication devices of the wireless communication device (130) and the one or more further wireless communication devices to the group for which a same positioning reference signal resource allocation is selected.

2. The method of claim 1, further comprising:
- triggering (1105) positioning measurements for the wireless communication device (130) based on the selected positioning reference signal resource allocation.

3. The method of any one of the preceding claims, further comprising:
- adapting (1104) the positioning reference signal resource allocation selected for the wireless communication devices assigned to the group based on the one or more positioning conditions of the wireless communication devices assigned to the group.

4. The method of any one of the preceding claims, wherein the method further comprises transmitting (1106) a configuration of the selected positioning reference signal resource allocation to at least one of
the wireless communication device (130),
one or more further wireless communication devices, or
one or more radio access nodes (101-103) of the communications network (130).

5. The method of claim 4, wherein the configuration is identified using a predefined configuration-specific identifier.

6. The method of claim 4 or claim 5, further comprising:
- receiving from the wireless communication device or transmitting (1107) to the wireless communication device (130), a positioning reference signal (150) using the selected positioning reference signal resource allocation, wherein the positioning reference signal (150) is indicative of the configuration.

7. The method of claim 6, further comprising:
- receiving (1110), from the wireless communication device (130), a report indicative of a channel measurement information related to the received positioning reference signal (150), wherein the channel measurement information is indicative of the configuration.

8. The method of any one of the preceding claims, wherein the positioning reference signal resource allocation comprises a beam configuration for communicating the positioning reference signals (150), wherein the method further comprises:
- receiving from the wireless communication device or transmitting to the wireless communication device the positioning reference signals (150) using the beam configuration.

9. A method of operating a communications network comprising a network node (120) and a wireless communication device (130), the method comprising:
- transmitting (1201) from the wireless communication device (130) one or more positioning conditions of the wireless communication device (130) to the network node (120),
- selecting (1102), at the network node (120), a positioning reference signal resource allocation for positioning reference signals (150) from a set of positioning reference signal resource allocations based on the one or more positioning conditions of the wireless communication device (130) and based on one or more further positioning reference signal resource allocations of one or more further wireless communication devices, and
- creating (1103), at the network node (120), a group by assigning those wireless communication devices of the wireless communication device (130) and the one or more further wireless communication devices to the group for which a same positioning reference signal resource allocation is selected, and
- transmitting (1106, 1202), from the network node (120) to the wireless communication device (130), a configuration of the selected positioning reference signal resource allocation for communicating positioning reference signals (150).

10. The method of claim 9, further comprising:
- transmitting from the wireless communication device (130) to a radio access node (101-103) or receiving (1203) at the wireless communication device (130) from a radio access node (101-103), a positioning reference signal (150) using the selected positioning reference signal resource allocation, wherein the positioning reference signal (150) is indicative of the configuration.

11. The method of claim 10, further comprising:
- transmitting (1207), from the wireless communication device (130) to the radio access node (101-103), a report indicative of a channel measurement information related to the received positioning reference signal (150), wherein the channel measurement information is indicative of the configuration.

12. The method of any one of the preceding claims, wherein the one or more positioning conditions comprise one or more of the following:
an accuracy constraint on the positioning of the wireless communication device (130);
a latency constraint on the positioning of the wireless communication device (130);
an energy consumption constraint of the wireless communication device (130);
a mobility level of the wireless communication device (130);
a channel measurement report of the wireless communication device (130).

13. The method of any one of the preceding claims, wherein the one or more positioning conditions comprise one or more semi-static information elements and/or one or more dynamic information elements.

14. A network node of a communications network, the network node (120) comprising control circuitry (121, 123) configured to
- obtain (1101) one or more positioning conditions of a wireless communication device (130),
- select (1102) a positioning reference signal resource allocation for positioning reference signals (150) from a set of positioning reference signal resource allocations based on the one or more positioning conditions of the wireless communication device (130) and based on one or more further positioning reference signal resource allocations of one or more further wireless communication devices, and
- create (1103) a group by assigning those wireless communication devices of the wireless communication device (130) and the one or more further wireless communication devices to the group for which a same positioning reference signal resource allocation is selected.

15. A communications network including the network node (120) of claim 14 and a wireless communication device (130) for communicating with the communications network, the wireless communication device (130) comprising control circuitry (131, 133) configured to
- transmit (1201) one or more positioning conditions of the wireless communication device (130) to a network node (120) of the communications network (100), and
- receive (1202) a configuration of a positioning reference signal resource allocation for communicating positioning reference signals (150).

## Patentansprüche

1. Verfahren zum Betreiben eines Netzwerkknotens eines Kommunikationsnetzwerks, das Verfahren umfassend:
- Erhalten (1101) einer oder mehrerer Positionierungsbedingungen einer drahtlosen Kommunikationsvorrichtung (130),
- Auswählen (1102) einer Positionierungsreferenzsignalressourcenzuweisung zum Positionieren von Referenzsignalen (150) aus einem Satz von Positionierungsreferenzsignalressourcenzuweisungen basierend auf der einen oder den mehreren Positionierungsbedingungen der drahtlosen Kommunikationsvorrichtung (130) und basierend auf einer oder mehreren weiteren Positionierungsreferenzsignalressourcenzuweisungen einer oder mehrerer weiterer drahtloser Kommunikationsvorrichtungen, und
- Erstellen (1103) einer Gruppe durch Zuteilen dieser drahtlosen Kommunikationsvorrichtungen der drahtlosen Kommunikationsvorrichtung (130) und der einen oder der mehreren weiteren drahtlosen Kommunikationsvorrichtungen zu der Gruppe, für die eine gleiche Positionierungsreferenzsignalressourcenzuweisung ausgewählt ist.

2. Verfahren nach Anspruch 1, ferner umfassend:
- Auslösen (1105) von Positionierungsmessungen für die drahtlose Kommunikationsvorrichtung (130) basierend auf der ausgewählten Positionierungsreferenzsignalressourcenzuweisung.

3. Verfahren nach einem der vorstehenden Ansprüche, ferner umfassend:
- Anpassen (1104) der Positionierungsreferenzsignalressourcenzuweisung, die für die drahtlosen Kommunikationsvorrichtungen ausgewählt ist, die der Gruppe zugeteilt sind, basierend auf der einen oder den mehreren Positionierungsbedingungen der drahtlosen Kommunikationsvorrichtungen, die der Gruppe zugeteilt sind.

4. Verfahren nach einem der vorstehenden Ansprüche, wobei das Verfahren ferner ein Übertragen (1106) einer Konfiguration der ausgewählten Positionierungsreferenzsignalressourcenzuweisung an mindestens eines umfasst von
der drahtlosen Kommunikationsvorrichtung (130),
einer oder mehreren weiteren drahtlosen Kommunikationsvorrichtungen, oder
einem oder mehreren Funkzugangsknoten (101-103) des Kommunikationsnetzwerks (130).

5. Verfahren nach Anspruch 4, wobei die Konfiguration unter Verwendung eines vordefinierten konfigurationsspezifischen Identifizierers identifiziert wird.

6. Verfahren nach Anspruch 4 oder 5, ferner umfassend:
- Empfangen von der drahtlosen Kommunikationsvorrichtung oder Übertragen (1107) an die drahtlose Kommunikationsvorrichtung (130) eines Positionierungsreferenzsignals (150) unter Verwendung der ausgewählten Positionierungsreferenzsignalressourcenzuweisung, wobei das Positionierungsreferenzsignal (150) die Konfiguration angibt.

7. Verfahren nach Anspruch 6, ferner umfassend:
- Empfangen (1110), von der drahtlosen Kommunikationsvorrichtung (130), eines Berichts, der eine Kanalmessinformation angibt, die sich auf das empfangene Positionierungsreferenzsignal (150) bezieht, wobei die Kanalmessinformationen die Konfiguration angeben.

8. Verfahren nach einem der vorstehenden Ansprüche, wobei die Positionierungsreferenzsignalressourcenzuweisung eine Strahlkonfiguration zum Kommunizieren der Positionierungsreferenzsignale (150) umfasst, wobei das Verfahren ferner umfasst:
- Empfangen von der drahtlosen Kommunikationsvorrichtung oder Übertragen an die drahtlose Kommunikationsvorrichtung der Positionierungsreferenzsignale (150) unter Verwendung der Strahlkonfiguration.

9. Verfahren zum Betreiben eines Kommunikationsnetzwerks umfassend einen Netzwerkknoten (120) und eine drahtlose Kommunikationsvorrichtung (130), das Verfahren umfassend:
- Übertragen (1201) von der drahtlosen Kommunikationsvorrichtung (130) einer oder mehrerer Positionierungsbedingungen der drahtlosen Kommunikationsvorrichtung (130) an den Netzwerkknoten (120),
- Auswählen (1102), an dem Netzwerkknoten (120), einer Positionierungsreferenzsignalressourcenzuweisung für Positionierungsreferenzsignale (150) aus einem Satz von Positionierungsreferenzsignalressourcenzuweisungen basierend auf der einen oder den mehreren Positionierungsbedingungen der drahtlosen Kommunikationsvorrichtung (130) und basierend auf einer oder mehreren weiteren Positionierungsreferenzsignalressourcenzuweisungen einer oder mehrerer weiterer drahtloser Kommunikationsvorrichtungen, und
- Erstellen (1103), an dem Netzwerkknoten (120), einer Gruppe durch Zuteilen dieser drahtlosen Kommunikationsvorrichtungen der drahtlosen Kommunikationsvorrichtung (130) und der einen oder der mehreren weiteren drahtlosen Kommunikationsvorrichtungen zu der Gruppe, für die eine gleiche Positionierungsreferenzsignalressourcenzuweisung ausgewählt ist, und
- Übertragen (1106, 1202), von dem Netzwerkknoten (120) an die drahtlose Kommunikationsvorrichtung (130), einer Konfiguration der ausgewählten Positionierungsreferenzsignalressourcenzuweisung zum Kommunizieren von Positionierungsreferenzsignalen (150).

10. Verfahren nach Anspruch 9, ferner umfassend:
- Übertragen von der drahtlosen Kommunikationsvorrichtung (130) an einen Funkzugangsknoten (101-103) oder Empfangen (1203) an der drahtlosen Kommunikationsvorrichtung (130) von einem Funkzugangsknoten (101-103) eines Positionierungsreferenzsignals (150) unter Verwendung der ausgewählten Positionierungsreferenzsignalressourcenzuweisung, wobei das Positionierungsreferenzsignal (150) die Konfiguration angibt.

11. Verfahren nach Anspruch 10, ferner umfassend:
- Übertragen (1207), von der drahtlosen Kommunikationsvorrichtung (130) an den Funkzugangsknoten (101-103), eines Berichts, der eine Kanalmessinformation angibt, die sich auf das empfangene Positionierungsreferenzsignal (150) bezieht, wobei die Kanalmessinformationen die Konfiguration angeben.

12. Verfahren nach einem der vorstehenden Ansprüche, wobei die eine oder die mehreren Positionierungsbedingungen eines oder mehrere der Folgenden umfassen:
einer Genauigkeitsbeschränkung der Positionierung der drahtlosen Kommunikationsvorrichtung (130);
einer Latenzbeschränkung der Positionierung der drahtlosen Kommunikationsvorrichtung (130);
einer Energieverbrauchsbeschränkung der drahtlosen Kommunikationsvorrichtung (130);
eines Mobilitätsniveaus der drahtlosen Kommunikationsvorrichtung (130);
eines Kanalmessberichts der drahtlosen Kommunikationsvorrichtung (130).

13. Verfahren nach einem der vorstehenden Ansprüche, wobei die eine oder die mehreren Positionierungsbedingungen ein oder mehrere halbstatische Informationselemente und/oder ein oder mehrere dynamische Informationselemente umfassen.

14. Netzwerkknoten eines Kommunikationsnetzwerks, der Netzwerkknoten (120) umfassend eine Steuerschaltung (121, 123), die konfiguriert ist zum
- Erhalten (1101) einer oder mehrerer Positionierungsbedingungen einer drahtlosen Kommunikationsvorrichtung (130),
- Auswählen (1102) einer Positionierungsreferenzsignalressourcenzuweisung zum Positionieren von Referenzsignalen (150) aus einem Satz von Positionierungsreferenzsignalressourcenzuweisungen basierend auf der einen oder den mehreren Positionierungsbedingungen der drahtlosen Kommunikationsvorrichtung (130) und basierend auf einer oder mehreren weiteren Positionierungsreferenzsignalressourcenzuweisungen einer oder mehrerer weiterer drahtloser Kommunikationsvorrichtungen, und
- Erstellen (1103) einer Gruppe durch Zuteilen dieser drahtlosen Kommunikationsvorrichtungen der drahtlosen Kommunikationsvorrichtung (130) und der einen oder der mehreren weiteren drahtlosen Kommunikationsvorrichtungen zu der Gruppe, für die eine gleiche Positionierungsreferenzsignalressourcenzuweisung ausgewählt ist.

15. Kommunikationsnetzwerk, das den Netzwerkknoten (120) nach Anspruch 14 und eine drahtlose Kommunikationsvorrichtung (130) zum Kommunizieren mit dem Kommunikationsnetzwerk einschließt, die drahtlose Kommunikationsvorrichtung (130) umfassend eine Steuerschaltung (131, 133), die konfiguriert ist zum
- Übertragen (1201) einer oder mehrerer Positionierungsbedingungen der drahtlosen Kommunikationsvorrichtung (130) an einen Netzwerkknoten (120) des Kommunikationsnetzwerks (100), und
- Empfangen (1202) einer Konfiguration einer Positionierungsreferenzsignalressourcenzuweisung zum Kommunizieren von Positionierungsreferenzsignalen (150).

## Revendications

1. Procédé de fonctionnement d'un noeud de réseau d'un réseau de communications, le procédé comprenant :
- l'obtention (1101) d'une ou plusieurs conditions de positionnement d'un dispositif de communication sans fil (130),
- la sélection (1102) d'une allocation de ressource de signal de référence de positionnement pour des signaux de référence de positionnement (150) parmi un ensemble d'allocations de ressource de signal de référence de positionnement en fonction de la ou des conditions de positionnement du dispositif de communication sans fil (130) et en fonction d'une ou plusieurs allocations de ressource de signal de référence de positionnement supplémentaires d'un ou plusieurs dispositifs de communication sans fil supplémentaires, et
- la création (1103) d'un groupe en attribuant ces dispositifs de communication sans fil du dispositif de communication sans fil (130) et du ou des dispositifs de communication sans fil supplémentaires au groupe pour lequel une même allocation de ressource de signal de référence de positionnement est sélectionnée.

2. Procédé selon la revendication 1, comprenant en outre :
- le déclenchement (1105) de mesures de positionnement pour le dispositif de communication sans fil (130) en fonction de l'allocation de ressource de signal de référence de positionnement sélectionnée.

3. Procédé selon l'une quelconque des revendications précédentes, comprenant en outre :
- l'adaptation (1104) de l'allocation de ressource de signal de référence de positionnement sélectionnée pour les dispositifs de communication sans fil attribués au groupe en fonction de la ou des conditions de positionnement du dispositif de communication sans fil attribuées au groupe.

4. Procédé selon l'une quelconque des revendications précédentes, dans lequel le procédé comprend en outre la transmission (1106) d'une configuration de l'allocation de ressource de signal de référence de positionnement sélectionnée à au moins l'un parmi
le dispositif de communication sans fil (130),
un ou plusieurs dispositifs de communication sans fil supplémentaires, ou
un ou plusieurs noeuds d'accès radio (101-103) du réseau de communications (130).

5. Procédé selon la revendication 4, dans lequel la configuration est identifiée à l'aide d'un identificateur prédéfini spécifique à la configuration.

6. Procédé selon la revendication 4 ou la revendication 5, comprenant en outre :
- la réception depuis le dispositif de communication sans fil ou la transmission (1107) vers le dispositif de communication sans fil (130), d'un signal de référence de positionnement (150) à l'aide de l'allocation de ressource de signal de référence de positionnement sélectionnée, dans lequel le signal de référence de positionnement (150) indique la configuration.

7. Procédé selon la revendication 6, comprenant en outre :
- la réception (1110), depuis le dispositif de communication sans fil (130), d'un rapport indiquant des informations de mesure de canal se rapportant au signal de référence de positionnement (150) reçu, dans lequel les informations de mesure de canal indiquent la configuration.

8. Procédé selon l'une quelconque des revendications précédentes, dans lequel l'allocation de ressource de signal de référence de positionnement comprend une configuration de faisceau permettant de communiquer les signaux de référence de positionnement (150), dans lequel le procédé comprend en outre :
- la réception depuis le dispositif de communication sans fil ou la transmission vers le dispositif de communication sans fil des signaux de référence de positionnement (150) à l'aide de la configuration de faisceau.

9. Procédé de fonctionnement d'un réseau de communications comprenant un noeud de réseau (120) et un dispositif de communication sans fil (130), le procédé comprenant :
- la transmission (1201) depuis le dispositif de communication sans fil (130) d'une ou plusieurs conditions de positionnement du dispositif de communication sans fil (130) vers le noeud de réseau (120),
- la sélection (1102), au niveau du noeud de réseau (120), d'une allocation de ressource de signal de référence de positionnement pour des signaux de référence de positionnement (150) parmi un ensemble d'allocations de ressource de signal de référence de positionnement en fonction de la ou des conditions de positionnement du dispositif de communication sans fil (130) et en fonction d'une ou plusieurs allocations de ressource de signal de référence de positionnement supplémentaires d'un ou plusieurs dispositifs de communication sans fil supplémentaires, et
- la création (1103), au niveau du noeud de réseau (120), d'un groupe en attribuant ces dispositifs de communication sans fil du dispositif de communication sans fil (130) et du ou des dispositifs de communication sans fil supplémentaires au groupe pour lequel une même allocation de ressource de signal de référence de positionnement est sélectionnée, et
- la transmission (1106, 1202), depuis le noeud de réseau (120) vers le dispositif de communication sans fil (130), d'une configuration de l'allocation de ressource de signal de référence de positionnement sélectionnée permettant de communiquer des signaux de référence de positionnement (150).

10. Procédé selon la revendication 9, comprenant en outre :
- la transmission depuis le dispositif de communication sans fil (130) vers un noeud d'accès radio (101-103) ou la réception (1203) au niveau du dispositif de communication sans fil (130) depuis un noeud d'accès radio (101-103), d'un signal de référence de positionnement (150) à l'aide de l'allocation de ressource de signal de référence de positionnement sélectionnée, dans lequel le signal de référence de positionnement (150) indique la configuration.

11. Procédé selon la revendication 10, comprenant en outre :
- la transmission (1207), depuis le dispositif de communication sans fil (130) vers le noeud d'accès radio (101-103), d'un rapport indiquant des informations de mesure de canal se rapportant au signal de référence de positionnement (150) reçu, dans lequel les informations de mesure de canal indiquent la configuration.

12. Procédé selon l'une quelconque des revendications précédentes, dans lequel la ou les conditions de positionnement comprennent un ou plusieurs de ce qui suit :
une contrainte de précision sur le positionnement du dispositif de communication sans fil (130) ;
une contrainte de latence sur le positionnement du dispositif de communication sans fil (130) ;
une contrainte de consommation énergétique du dispositif de communication sans fil (130) ;
un niveau de mobilité du dispositif de communication sans fil (130) ;
un rapport de mesure de canal du dispositif de communication sans fil (130).

13. Procédé selon l'une quelconque des revendications précédentes, dans lequel la ou les conditions de positionnement comprennent un ou plusieurs éléments d'informations semi-statiques et/ou un ou plusieurs éléments d'informations dynamiques.

14. Noeud de réseau d'un réseau de communications, le noeud de réseau (120) comprenant un système de circuit de commande (121, 123) configuré pour
- obtenir (1101) une ou plusieurs conditions de positionnement d'un dispositif de communication sans fil (130),
- sélectionner (1102) une allocation de ressource de signal de référence de positionnement pour des signaux de référence de positionnement (150) parmi un ensemble d'allocations de ressource de signal de référence de positionnement en fonction de la ou des conditions de positionnement du dispositif de communication sans fil (130) et en fonction d'une ou plusieurs allocations de ressource de signal de référence de positionnement supplémentaires d'un ou plusieurs dispositifs de communication sans fil supplémentaires, et
- créer (1103) un groupe en attribuant ces dispositifs de communication sans fil du dispositif de communication sans fil (130) et du ou des dispositifs de communication sans fil supplémentaires au groupe pour lequel une même allocation de ressource de signal de référence de positionnement est sélectionnée.

15. Réseau de communications comportant le noeud de réseau (120) selon la revendication 14 et un dispositif de communication sans fil (130) permettant de communiquer avec le réseau de communications, le dispositif de communication sans fil (130) comprenant un système de circuit de commande (131, 133) configuré pour
- transmettre (1201) une ou plusieurs conditions de positionnement du dispositif de communication sans fil (130) à un noeud de réseau (120) du réseau de communications (100), et
- recevoir (1202) une configuration d'une allocation de ressource de signal de référence de positionnement permettant de communiquer des signaux de référence de positionnement (150).
